# EUROPEAN PATENT APPLICATION

(11) **EP 4 607 081 A1**
(43) Date of publication of application: **27.08.2025**
(21) Application number: 24159432.4
(22) Date of filing: 23.02.2024
(51) Int. Cl.: F17C 1/06, B29C 70/86, B29C 70/32, B32B 27/36, B29C 65/64, F16J 12/00

(54) **NEW METHOD FOR PRODUCING A COMPOSITE TANK AND NEW COMPOSITE TANK PRODUCED BY THIS METHOD**

(71) Applicant: L'AIR LIQUIDE, SOCIÉTÉ ANONYME POUR L'ÉTUDE ET L'EXPLOITATION DES PROCÉDÉS GEORGES CLAUDE, 75007 Paris (FR); Covess N.V., 3510 Hasselt (BE)
(72) Inventor: PAPIN, Philippe, 78354 Les Loges en Josas (FR); DIRIX, Bert, 3510 Hasselt (BE); VANSWIJGENHOVEN, Tony, 3510 Hasselt (BE)
(74) Representative: Cabinet Camus Lebkiri

(57) **Abstract**

The invention relates to a method for producing a fibre composite tank (1), comprising:
- a step (S1) of assembling a removable moulding mandrel (8);
- a step (S2) of applying an end fitting (11a,11b) to the moulding mandrel (8), said end fitting (11a,11b) being a metal ring having an opening (14a,14b);
- a step (S3) of forming a first fibre composite shell layer (2) on the moulding mandrel (8) and on the end fitting (11a,11b);
- a step (S4) of disassembling and removing the moulding mandrel (8) through the opening (14a,14b);
- a step (S5) of shrinking a metal boss (10a,10b) by cooling;
- a step (S6) of inserting the metal boss (10a,10b) in the opening (14a,14b) of the end fitting (11a,11b);
- a step (S7) of expanding the metal boss (10a,10b) by warming.

The invention also relates to a fibre composite tank (1).

## Description

### TECHNICAL FIELD

The invention relates to pressurized fluid storage tanks.

More specifically, the invention relates to a new method for producing a fibre composite tank for containing a pressurised fluid and to a new fibre composite tank obtained by this method.

### STATE OF THE ART

The fibre composite cylindrical type V tanks constitute an interesting highpressure composite tank design to comply with compressed fluid storage for transportation.

As described in the international patent application WO2011/143723 by one of the co-applicants of this application, during the producing of a fibre composite tank, a homogeneous liner, preferably made from the same resin as the tank reinforcement structure, is wound around a removable mandrel to guarantee the fluid tightness of the tank. This liner is then wrapped by a first fibre composite shell layer made by winding composite tapes made of a composite material mixing fibres and thermoplastic resin around the liner. The dome of the first fibre composite shell layer is closed by a closing arrangement that usually comprises an overmoulded boss made of metal assembled inside an annular end fitting made of plastic material, this closing arrangement being overmolded with a second fibre composite shell layer, similar to the first one, to increase tank burst pressure.

When carrying such a joining arrangement, most of the time, it ends up with a leak around the dome area mainly because of the very narrow thermal processing window. Because of the deformation of the plastic annular end fitting when the resin is heated, a leak may also appear between the plastic end fitting and the overmoulded metal boss, and/or the plastic end fitting and the first fibre composite shell layer.

The present application presents an improvement of the method described in the international patent application WO2011/143723 in order to improve the fluid tightness around the dome area of a fibre composite cylindrical type V tank.

### DESCRIPTION

There is a need for a storage tank for pressurized fluids with improved quality and reliability of the closing arrangement and of the joining arrangement between said closing arrangement and the first fibre composite shell layer, as well as a need for convenient method for producing such a storage tank.

To this end, the invention is based in particular on the use of a closing arrangement for the dome that comprises a boss made of metal assembled in a tight fit inside an annular end fitting also made of metal.

The invention relates to a method for producing a fibre composite tank for containing a fluid, extending along a longitudinal axis X, comprising the following steps:
- a step of assembling a removable moulding mandrel;
- a step of applying an end fitting to the moulding mandrel, said end fitting being a metal ring having an opening bounded by an annular inner radial surface and large enough for removing the moulding mandrel therethrough after being disassembled;
- a step of forming a first fibre composite shell layer on the outer surface of the moulding mandrel and on the outer surface of the end fitting, forming an extraction orifice for the moulding mandrel;
- a step of disassembling and removing the moulding mandrel through the opening of the end fitting;
- a step of shrinking a metal boss by cooling it to a negative temperature, the metal boss having a base with an annular outer radial surface;
- a step of inserting the annular outer radial surface of the metal boss in the opening of the end fitting through the extraction orifice;
- a step of expanding the metal boss by warming it to a positive temperature, the annular outer radial surface of the metal boss being in sealing contact with the annular inner radial surface of the opening.

The use of a metal ring instead of a plastic ring advantageously prevents it from deforming during the heating stages designed to solidify the resin of the composite shell layer, thus improving the tank's seal at the dome. In addition, this seal is guaranteed between the metal ring and the end fitting by their press-fit assembly obtained by shrinking the end fitting before inserting it into the metal ring.

In an embodiment of the method, the step of forming a first fibre composite shell layer comprises the following steps:
- a step of winding a liner film made of polymer resin, around the moulding mandrel and the end fitting;
- a step of winding composite tapes made of a composite material mixing fibres and polymer resin, around the liner film; and
- a step of heating or curing the liner film and/or the composite tapes for consolidating the composite tapes and liner film together.

Advantageously, the polymer resin of the liner film and the polymer resin of the composite tapes are the same.

Advantageously, the polymer resin of the liner film and/or of the polymer resin of the composite tapes is thermoplastic resin.

Advantageously, the polymer resin of the liner film and/or of the composite tapes is a polymer from the polyolefins family, a polymer from the polyesters family, a polymer from the polyacetals family, a polymer from the polyaryletherketones (PAEK) family, a polymer from the polyamides family, a polymer from the thermoplastic polyurethanes family, polyphenylene sulfide (PPS) or a mixture of these.

In another embodiment of the method, the step of winding a liner film and/or the step of winding composite tapes are/is performed simultaneously with the step of heating the liner film and/or the composite tapes.

In a further embodiment of the method, the step of shrinking a metal boss is performed by immersing the metal boss in dry ice made of solid carbon dioxide.

In an embodiment of the method, the metal boss has a neck protruding outside the opening of the end fitting, and the method comprises the following step after the step of expanding the metal boss:
- a step of inserting an annular sealing element in the extraction orifice, around and in contact with the neck.

Advantageously, the annular sealing element is made of polymer resin, preferably thermoplastic resin.

In an embodiment of the method, the metal boss has a neck protruding outside the opening of the end fitting, and the method comprises the following step after the step of expanding the metal boss:
- a step of forming a second fibre composite shell layer on the first fibre composite shell layer and the annular sealing element.

In another embodiment of the method, the step of forming a second fibre composite shell layer comprises the following steps:
- a step of winding composite tapes made of a composite material mixing fibres and polymer resin, around the first fibre composite shell layer and the annular sealing element; and
- a step of heating the composite tapes for consolidating the first fibre composite shell layer and the second fibre composite shell layer together.

Advantageously, the polymer resin of the annular sealing element, of the first fibre composite shell layer and of the second fibre composite shell layer is the same.

Advantageously, the polymer resin of the annular sealing element, of the first fibre composite shell layer and/or of the second fibre composite shell is thermoplastic resin.

Advantageously, the polymer resin of the annular sealing element, of the first fibre composite shell layer and of the second fibre composite shell layer is a polymer from the polyolefins family, a polymer from the polyesters family, a polymer from the polyacetals family, a polymer from the polyaryletherketones (PAEK) family, a polymer from the polyamides family, a polymer from the thermoplastic polyurethanes family, polyphenylene sulfide (PPS) or a mixture of these.

Advantageously, the fibres of the composite tapes comprise carbon fibres, glass fibres and/or basalt fibres.

Another aspect of the invention relates to a fibre composite tank for containing a fluid, which is a product resulting from a method according to the invention, and comprising:
- a first fibre composite shell layer,
- a metal boss having a base with an annular outer radial surface, and
- an end fitting being a metal ring having an opening bounded by an annular inner radial surface;
and wherein the annular outer radial surface of the metal boss is in sealing contact with the annular inner radial surface of the opening.

The fibre composite tank obtained by this method can thus be produced with an improved fluid tightness, able to withstand an overpressure of at least 2 bars.

Advantageously, the metal boss has a neck protruding outside the extraction orifice, and the fibre composite tank also comprises:
- an annular sealing element located in the extraction orifice, around and in contact with the neck,
- a second fibre composite shell layer bonded to the first fibre composite shell layer and to the annular sealing element.

Advantageously an inner face of the end fitting and an inner face of the metal boss received inside the end fitting form a slope converging towards the outside of the fibre composite tank.

Advantageously, at least one among an end fitting and the base of a metal boss has an outer surface provided with at least one back draft shaped recess.

Advantageously, a back draft shaped recess is in the form of a back draft shaped groove.

Advantageously, a back draft shaped groove has a fishtail, polygonal, round or oval cross-section.

Advantageously, at least one among an end fitting and the base of a metal boss has an outer surface provided with at least one raised shape.

Advantageously, the fibre composite tank further comprises an annular seal provided between the annular outer radial surface of a metal boss and the annular inner radial surface of an end fitting.

Advantageously, the annular seal is an O-ring seal or a injected seal formed by injecting an elastomer material, the annular seal being housed into two opposing annular grooves, with one annular groove provided in the annular inner radial surface of the end fitting and one annular groove provided in the annular outer radial surface of the metal boss.

Advantageously, the end fitting has an annular outer radial surface that is thinner than the annular inner radial surface.

Advantageously, the annular outer radial surface is in the form of an angled ridge.

Advantageously, the annular inner radial surface of the opening of the end fitting and the annular outer radial surface of the metal boss are cylindrical around the longitudinal axis X.

Advantageously, the annular inner radial surface of the opening of the end fitting and the annular outer radial surface of the metal boss are frustoconical around the longitudinal axis X.

### LIST OF FIGURES

The invention is further elucidated in the appending figures and figure description explaining preferred embodiments of the invention. Note that the figures are not drawn to scale. The figures are intended to describe the principles of the invention.
Figure 1 illustrates the main steps of a method for producing a fibre composite tank according to the invention.
Figure 2 is a schematic view in perspective of a partially assembled moulding mandrel suitable for implementing a method of producing a fibre composite tank according to the invention.
Figure 3 is a schematic profile view of the assembled moulding mandrel of Figure 2 with two end fittings.
Figure 4 is a schematic view in perspective of a fibre composite shell layer wound on the assembled moulding mandrel of Figure 3.
Figures 5-7 are schematic cross-sectional views of a dome of a fibre composite tank according to the invention, illustrating the following steps of the method for producing the fibre composite tank:

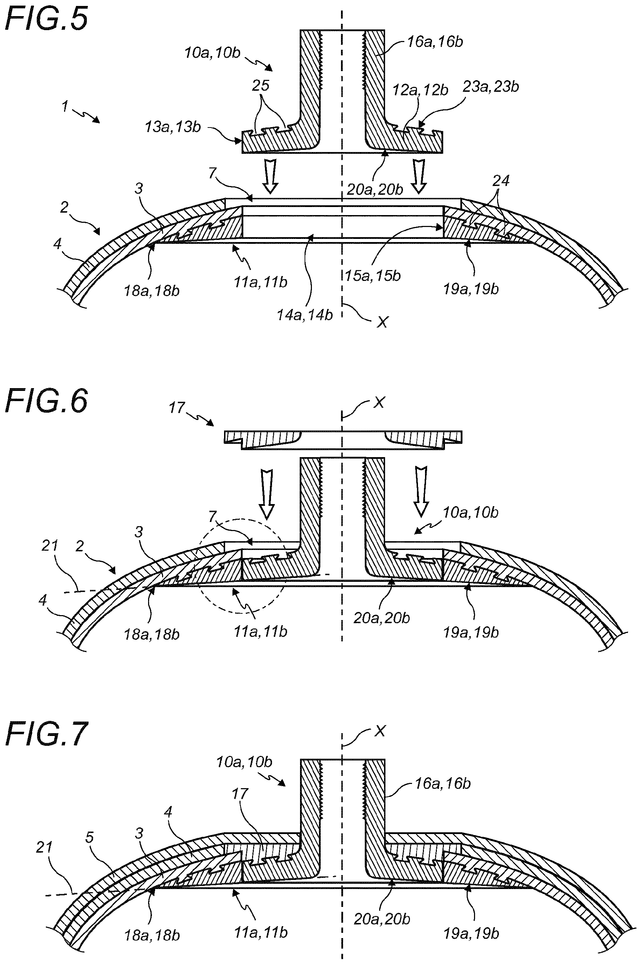

   - Figure 5: inserting a metal boss in the opening of an overmolded end fitting;
   - Figure 6: inserting an annular composite compatible sealing element in the extraction orifice, around and in contact with the neck of the metal boss: and Figure 7: forming a second fibre composite shell layer on the first fibre composite shell layer and the annular sealing element.

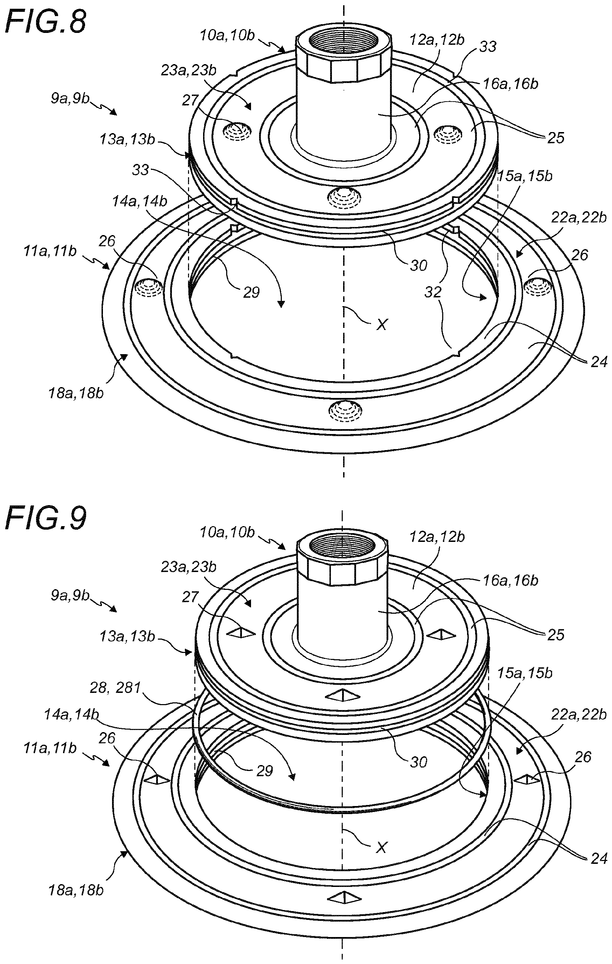

Figure 8 is a schematic view in perspective of a dome of a fibre composite tank according to the invention, illustrating the step of inserting a metal boss in the opening of an end fitting, the outer surface of the end fitting and the outer surface of the base of the metal boss both being provided with two concentric back draft shaped grooves and half-spheric raised shapes, and wherein two opposing annular grooves are provided in the annular outer radial surface of the metal boss and in the annular inner radial surface of the end fitting for accommodating an injected elastomer material.
Figure 9 is a schematic view similar to Figure 8, wherein the raised shapes are pyramidal and wherein the two opposing annular grooves are provided for accommodating an O-ring seal.

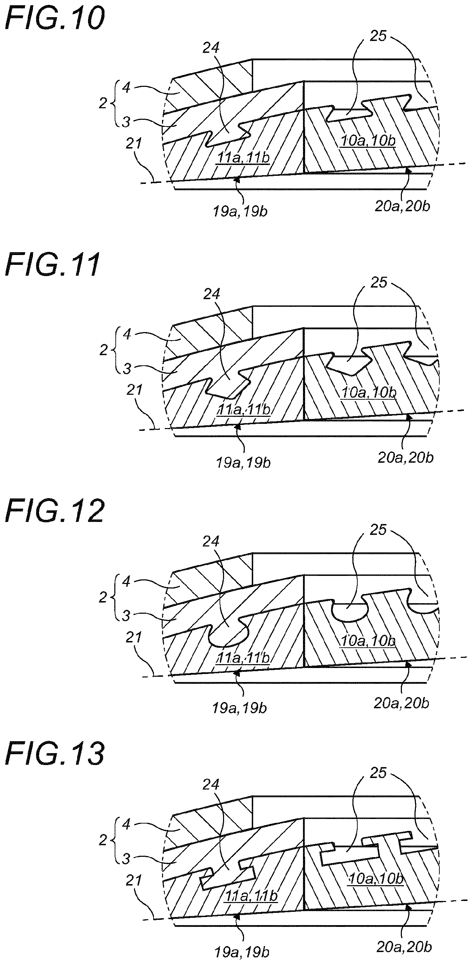

Figure 10 is a detail view of the circled part in Figure 6, wherein the back draft shaped grooves have a fishtail cross-section.
Figure 11 is a detail view of the circled part in Figure 6, wherein the back draft shaped grooves have a diamond-shaped cross-section.
Figure 12 is a detail view of the circled part in Figure 6, wherein the back draft shaped grooves have an oval-shaped cross-section.
Figure 13 is a detail view of the circled part in Figure 6, wherein the back draft shaped grooves have a rectangular cross-section.

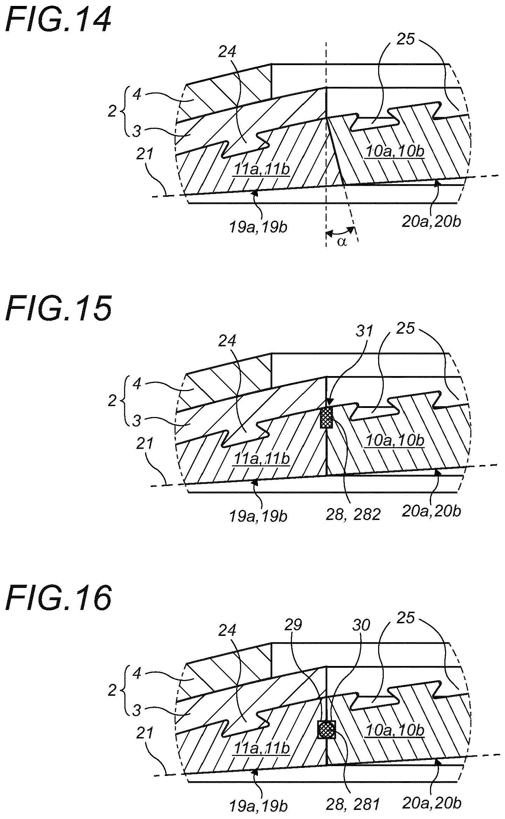

Figure 14 is a detail view of the circled part in Figure 6, wherein the annular inner radial surface of the end fitting and the annular outer radial surface of the metal boss are frustoconical instead of cylindrical around the longitudinal axis X.
Figure 15 is a detail view of the circled part in Figure 6, wherein an elastomer material is injected into two opposing annular grooves provided in the metal boss and the end fitting. That arrangement can be used until the second tape winding is finalised if needed.
Figure 16 is a detail view of the circled part in Figure 6, wherein an O-ring seal is provided into the two opposing annular grooves of Figure 15.

### DESCRIPTION OF THE DRAWINGS

Unless stated otherwise, a same element appearing on different figures bears a single reference.

Furthermore, the terms "first", "second", and the like in the description and in the claims, are used for distinguishing between similar elements and not necessarily for describing a sequential or chronological order.

The invention relates to a new method for producing a fibre composite tank 1 for containing a pressurised fluid and a new fibre composite tank 1 obtained by this method. Hereafter, the fibre composite tank 1 of the invention will only referred as "tank".

The pressurised fluid can be a pressurised gas, a pressurised liquid or a mixture of these.

Preferably, the tank 1 is cylindrical and has an internal volume for example in the range of 60 liters to 2000 liters, or even more.

The tank 1 can contain diverse types of fluids. By "fluids", it is meant gases or liquids. Examples of gases that can be contained in the tank 1 are hydrogen, helium, nitrogen, krypton, water, alkali, liquid acid or compressed natural gas (CNG). The tank 1 can contain all kind of gases or liquids.

The tank 1 comprises an inner first fibre composite shell layer 2, that preferably comprises a liner film 3 made of polymer resin, preferably thermoplastic resin, and composite tapes 4 made of a composite material mixing fibres and polymer resin, preferably thermoplastic resin, which are wound around the liner film 3 and consolidated together with the liner film 3.

The tank 1 preferably comprises an optional second fibre composite shell layer 5, which can also comprise composite tapes 4 made of a composite material mixing fibres and polymer resin, preferably thermoplastic resin. The presence of the second fibre composite shell layer 5 depends on the value of the pressure that the tank 1 has to withstand. Typically, the second fibre composite shell layer 5 is needed to increase tank burst pressure, for example when the tank 1 has to withstand a pressure of the order of 50 bar or higher.

The second fibre composite shell layer 5 also reduces the permeation of the tank 1.

According to the embodiments, the tank 1 is mainly cylindrical, extending along a longitudinal axis X, with two domes 6a,6b facing each other, with a dome 6a,6b at each of the two opposite ends of the tank 1. At least one dome 6a,6b has an opening forming an extraction orifice 7 large enough to enable the disassembly and removal of a moulding mandrel 8 through the opening (see further).

At least one dome having an extraction orifice 7 comprises a closing arrangement 9a,9b that comprises a metal boss 10a,10b and an end fitting 11a,11b assembled in tight arrangement around the metal boss 10a,10b.

The first and second fibre composite shell layers 2,5 preferably result in a monolithic layer made of a composite structure with an assembly with a closing arrangement 9a,9b that comprises a metal boss 10a,10b and an end fitting 11a,11b assembled in tight arrangement together.

A metal boss 10a,10b has a base 12a,12b with an annular outer radial surface 13a,13b, and an end fitting 11a,11b is a metal ring having an opening 14a,14b bounded by an annular inner radial surface 15a,15b; the annular outer radial surface 13a,13b of the metal boss 10a,10b being in sealing contact with the annular inner radial surface 15a,15b of the opening 14a,14b of the end fitting 11a,11b. At least one end fitting 11a,11b, preferably each, fitting 11a,11b is made of metal, for example of aluminium, aluminium alloy, steel or stainless steel.

Similarly, in a preferred embodiment at least one metal boss 10a,10b, preferably each, is made of metal, for example of aluminium, aluminium alloy, steel or stainless steel.

The annular outer radial surface 13a,13b of the metal boss 10a,10b and the annular inner radial surface 15a,15b of the end fitting 11a,11b preferably have complementary shapes. At room temperature, the diameter of the annular outer radial surface 13a,13b of the metal boss 10a,10b is preferably slightly higher than the diameter of the annular inner radial surface 15a,15b of the end fitting 11a,11b.

In a preferred embodiment, the annular inner radial surface 15a,15b of the opening 14a,14b of the end fitting 11a,11b and the annular outer radial surface 13a,13b of the metal boss 10a,10b are both cylindrical (cf. Figures 10-13) or frustoconical (cf. Figure 14) around the longitudinal axis X. The frustoconical shape makes it easier to introduce the metal boss 10a,10b inside the opening 14a,14b of the end fitting 11a,11b and provides self-centring. The angle α of the cone of the frustoconical shape with respect to the longitudinal axis X is preferably between 1° and 20°, more preferably between 3° and 15° and even more preferably between 5° and 10°.

The closing arrangement 9a,9b is overmolded with the first fibre composite shell layer 2 and with the optional second fibre composite shell layer 5.

The metal boss 10a,10b preferably has a neck 16a,16b that protrudes outside the opening 14a,14b of the end fitting 11a,11b.

In a preferred embodiment, the tank 1 also comprises at least one annular sealing element 17 located in the extraction orifice 7, around and in contact with the neck 16a,16b. The annular sealing element 17 is intended to fill most of the empty volume that may exist in the extraction orifice 7 between the first fibre composite shell layer 2 and the neck 16a,16b of the metal boss 10a,10b. It is preferably made of polymer resin, more preferably thermoplastic resin. The optional second fibre composite shell layer 5 is preferably bonded to the first fibre composite shell layer 2 and to the annular sealing element 17 in order to form a unitary rigid structure able to withstand an overpressure of at least 2 bars.

Preferably the polymer resin of the annular sealing element 17, of the first fibre composite shell layer 2 and of the second fibre composite shell layer 5 is the same or is chemically compatible, preferably a polymer from the polyolefins family - for example polypropylene (PP), a polymer from the polyesters family - for example polyethylene terephthalate (PET), a polymer from the polyacetals family - for example polyoxymethylene (POM), a polymer from the polyaryletherketones (PAEK) family - for example polyetherketoneketone (PEKK) or polyetheretherketone (PEEK), a polymer from the polyamides family - for example polyamide 6 (PA 6), polyamide 11 (PA 11), polyamide 12 (PA 12), polyamide 66 (PA 66) or polyphthalamide (PPA), a polymer from the thermoplastic polyurethanes family, polyphenylene sulfide (PPS) or a mixture of these.

In a preferred embodiment, the end fitting 11a,11b has an annular outer radial surface 18a,18b that is thinner than the annular inner radial surface 15a,15b. Thus, the end fitting 11a,11b has as a generally triangular cross-section. The annular outer radial surface 18a,18b is preferably in the form of an angled ridge.

In a preferred embodiment, the inner face 19a,19b of the end fitting 11a,11b and the inner face 20a,20b of the metal boss 10a,10b received inside the end fitting 11a,11b form a slope 21 converging towards the outside of the tank 1, namely towards the free end of the neck 16a,16b. This slope 21 can be straight or stepped, without any form of retention. Thus, the liquid - for example coming from a hydraulic test - can easily drain out of the tank 1 by gravity when the tank 1 is turned upside down so that the neck 16a, 16b is pointing downwards, notably after a hydraulic pressure test.

In a preferred embodiment, an outer surface 22a,22b of an end fitting 11a,11b and/or an outer surface 23a,23b of the base 12a,12b of a metal boss 10a,10b is provided with at least one back draft shaped recess 24,25 respectively. A back draft shaped recess 24,25 can be in the form of a back draft shaped groove, for example with at least one fishtail (cf. Figure 10), polygonal (cf. Figures 11 and 13), round or oval (cf. Figure 12) cross-section.

A back draft shaped recess 24,25 allows the resin to penetrate inside. A back draft shaped recess 24 of an end fitting 11a,11b improves the bonding of the first fibre composite shell layer 2 with said end fitting 11a,11b, whereas a back draft shaped recess 25 of a metal boss 10a, 10b improves the bonding of the second fibre composite shell layer 5 or the annular sealing element 17 with said metal boss 10a,10b. During process, the polymer needs to fill all the back draft shaped recess 24,25 in a way that air voids are to a maximum avoided.

To improve fluid tightness, the back draft shaped recess 24,25 can be filled, and partially consolidated by any appropriate mean, with polymer powder of the same chemistry or compatible chemistry of the polymer liner film 3 wound on the mandrel 8.

The dimensions of a back draft shaped recess 24,25 are preferably chosen to be large enough to let the resin fill it and to be small enough so as not to weaken the end fitting 11a,11b and/or the metal boss 10a,10b provided with.

In a preferred embodiment, the outer surface 22a,22b of an end fitting 11a,11b and/or the outer surface 23a,23b of the base 12a, 12b of a metal boss 10a,10b is provided with at least one raised shape 26,27 that prevents the end fitting 11a,11b and/or the metal boss 10a, 10b from rotating about the longitudinal axis X in relation to the first fibre composite shell layer 2 or to the annular sealing element 17.

For example, the raised shapes 26,27 can be semi-spherical (cf. Figure 8) or pyramidal (cf. Figure 9). Any other raised shape is suitable.

In a preferred embodiment, the tank 1 further comprises an annular seal 28 provided between the annular outer radial surface 13a,13b of a metal boss 10a,10b and the annular inner radial surface 15a,15b of an end fitting 11a,11b. The annular seal 28 is preferably provided into two opposing annular grooves 29, 30, with one annular groove 30 provided in the annular inner radial surface 15a,15b of the end fitting 11a,11b and one annular groove 29 provided in the annular outer radial surface 13a,13b of the metal boss 10a, 10b. For example, the annular seal 28 can be an O-ring seal 281 (cf. Figures 9 and 16) or an injected seal 282 (cf. Figure 15) formed by injecting an elastomer material. The injection of an elastomer material is preferably made through a channel 31 leading from the outside of the tank 1 to the two opposing annular grooves 29, 30, this channel 31 being formed by two notches 32, 33 facing each other, with one notch 32 being conformed in the annular inner radial surface 15a,15b of the end fitting 11a,11b and the other notch 33 being conformed in the annular outer radial surface 13a,13b of the metal boss 10a, 10b (cf. Figure 8).

In addition of the shrink fit, in the very unlikely event that is not tight enough to do the second winding, an elastomer material - for example like similar to the annular seal 28 or the O-ring seal 281 (28, 281) - or an epoxy bead can be used between the metal boss 10a,10b and the end fitting 11a,11b, but on the surface only.

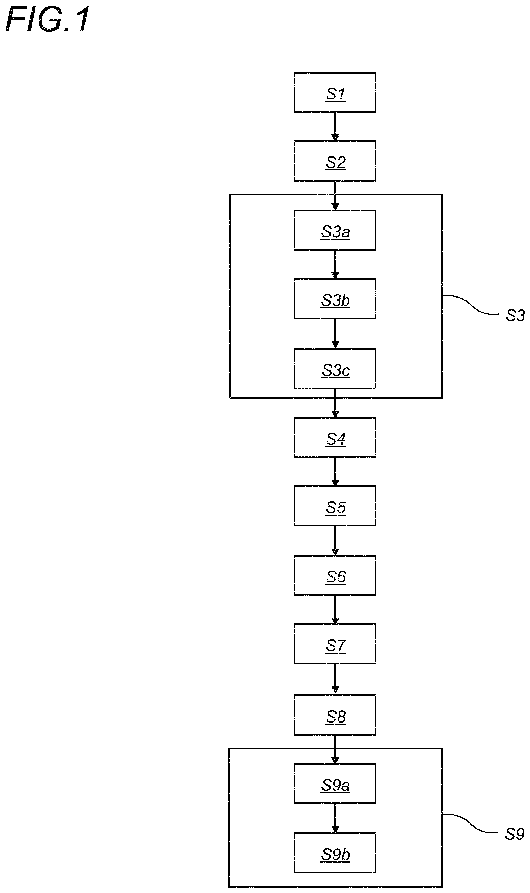

In what follows, a method for producing a tank 1 according to the invention will be described (cf. Figure 1). This method is an improvement of the method described in the international patent application WO2011/143723 and contains common steps that will be described below. A more detailed description of those common steps may be found in the above-mentioned international patent application.

In a step S1, a reusable and removable moulding mandrel 8 is assembled.

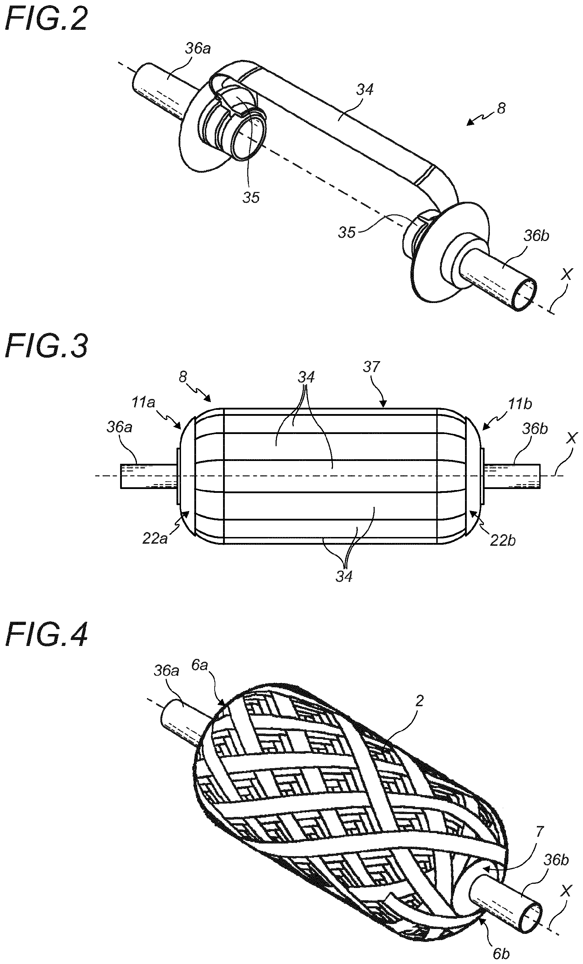

Figure 3 shows an example of a reusable and removable moulding mandrel 8 that can be used in the method of the present description. The mandrel 8 comprises a plurality of elongated segments 34 that are placed side by side to form a rounded outer surface. The mandrel 8 has a rotationally symmetric shape with a varying outer diameter around the symmetry longitudinal axis X and is suitable for film and tape winding. This geometry provides flexibility in the choice of shapes of the tank 1 to be produced. The tank 1 may be cylindrical, spherical, ellipsoidal, or of any other shape.

The elongated segments 34 of the mandrel 8 are made of metal, for example of aluminium, aluminium alloy, steel or stainless steel.

As shown on Figure 2, while assembling the mandrel 8, the elongated segments 34 are for example held together using segment holders 35 and two spindle parts 36a,36b. The elongated segments 34 are held in position by pulling the spindle parts 36a,36b away from each other. The segment holders 35 are mounted onto the spindle parts 36a,36b for engaging opposite ends of the elongated segments 34. Figure 2 shows a subset of the elongated segments 34 hold by two segment holders 35 arranged on the two spindle parts 36a and 36b for illustration purposes.

In a step S2, at least one end fitting 11a,11b is applied to the assembled mandrel 8. To apply an end fitting 11a,11b to the assembled mandrel 8, the end fitting 11a,11b is shifted on one of the spindle parts 36a,36b. Figure 3 shows the assembled mandrel 8 with two end fittings 11a,11b applied on it. Alternatively, only one end fitting 11a,11b may be applied on the assembled removable mandrel 8. Each end fitting 11a,11b is a metal ring comprising an opening 14a,14b bounded by an annular inner radial surface 15a,15b and large enough to enable the disassembly and removal of the mandrel 8 through the opening 14a,14b.

Each end fitting 11a,11b will stay in place after the fabrication of the tank 1.

After step S2, a step S3 is carried out wherein a first fibre composite shell layer 2 is formed on the outer surface 37 of the moulding mandrel 8 and on the outer surface 22a,22b of the end fitting 11a,11b, forming an extraction orifice 7 for the moulding mandrel 8 which is large enough to enable the disassembly and removal of the mandrel 8 through the extraction orifice 7.

In a preferred embodiment, the step S3 comprises the following steps:
- a step S3a of winding a liner film 3 made of polymer resin, around the moulding mandrel 8 and the end fitting 11a,11b;
- a step S3b of winding composite tapes 4 made of a composite material mixing fibres and polymer resin, around the liner film 3; and
- a step S3c of heating the liner film 3 and the composite tapes 4 for consolidating the composite tapes 4 and/or liner film 3 together.

When the polymer resin is thermoplastic resin, the first fibre composite shell layer 2 can be consolidated by heating, or by curing with a chemical activator or any other way.

The step S3 of forming a first fibre composite shell layer 2 can also be implemented under heat and pressure with a winding machine, the pressure conditions coming from the tension applied on the liner film 3 and the composite tapes 4 during winding. For example, the heat conditions are realized by a diode, microwave, infrared radiation, or by any other heating means.

The step S3a of winding a liner film 3 and/or the step S3b of winding composite tapes 4 are/is preferably performed simultaneously with step S3c of heating the liner film 3 and/or the composite tapes 4. Heating can also be performed after each winding.

For example, the fibres can be high-strength fibres, such as carbon fibres, glass fibres and/or basalt fibres, impregnated by a polymer resin, preferably thermoplastic resin, for example such as a polymer from the polyolefins family - for example polypropylene (PP), a polymer from the polyesters family - for example polyethylene terephthalate (PET), a polymer from the polyacetals family - for example polyoxymethylene (POM), a polymer from the polyaryletherketones (PAEK) family - for example polyetherketoneketone (PEKK) or polyetheretherketone (PEEK), a polymer from the polyamides family - for example polyamide 6 (PA 6), polyamide 11 (PA 11), polyamide 12 (PA 12), polyamide 66 (PA 66) or polyphthalamide (PPA), a polymer from the thermoplastic polyurethanes family, polyphenylene sulfide (PPS) or a mixture of these.

The polymer resin of the liner film 3 and the polymer resin of the composite tapes 4 are preferably the same or chemically compatible.

A detailed description of the winding process and parameters can be found in the international patent application WO2011/143723.

In the case where the end fitting 11a,11b has an outer surface 22a,22b provided with at least one back draft shaped recess 24 a part of the resin of the first fibre composite shell layer 2 penetrate at least inside one back draft shaped recess 24, improving the bonding between the first fibre composite shell layer 2 and the end fitting 11a,11b.

Figure 4 shows the assembled mandrel 8 with a first fibre composite shell layer 2 formed on its outer surface 37 and on the outer surface 22a,22b of the end fitting 11a,11b.

Once the first fibre composite shell layer 2 has been formed, in a following step S4, the mandrel 8 is disassembled and its different parts are removed from the tank 1 through an opening 14a,14b of at least one end fitting 11a,11b. The disassembly can be carried out as follows: pushing the spindle parts 36a,36b inside the tank 1, removing the segment holders 35 from the spindle parts 36a,36b (e.g. by inserting a hand inside the hollow spindle parts 36a,36b), extracting the spindle parts 36a,36b from the tank 1, removing the segment holders 35 and the elongated segments 34 from the tank 1 through the opening 14a,14b of an end fitting 11a,11b, while leaving the end fittings 11a,11b in place.

After the mandrel 8 has been completely disassembled and removed from the tank 1, in a following step S5, a metal boss 10a,10b is shrunk by cooling it to a negative temperature. By "shrunk" we mean that the dimensions of the metal boss 10a,10b are smaller than its normal dimensions at room temperature.

The step S5 of shrinking a metal boss 10a,10b is preferably performed by immersing the metal boss 10a,10b in dry ice made of solid carbon dioxide, for example at a temperature of approximately -80 °C.

Once a metal boss 10a,10b has been shrunk, in a following step S6, the annular outer radial surface 13a,13b of the metal boss 10a,10b is inserted in the opening 14a,14b of an end fitting 11a,11b through the extraction orifice 7 (cf. Figures 5, 8 and 9). This step S6 of inserting is easier in the case where the annular inner radial surface 15a,15b of the opening 14a,14b of the end fitting 11a,11b and the annular outer radial surface 13a,13b of the metal boss 10a,10b are both frustoconical around the longitudinal axis X, with the same taper, the frustoconical shape being open towards the outside of the tank 1. The frustoconical shape also provides self-centring for the metal boss 10a, 10b and the end fitting 11a,11b.

After step S6, a step S7 is carried out wherein the metal boss 10a,10b inserted in an end fitting 11a,11b is expanded by warming it to a positive temperature, preferably at room temperature. By "expanded" we mean that the dimensions of the metal boss 10a,10b are bigger than its dimensions at a negative temperature. Thus, the dimensions of the "expanded" metal boss 10a, 10b can be the same than its normal dimensions at room temperature. While expanding, the annular outer radial surface 13a,13b of the metal boss 10a,10b comes in sealing contact, with a tight fit, with the annular inner radial surface 15a,15b of the opening 14a,14b of the end fitting 11a,11b.

In a preferred embodiment, an additional and optional step S8 following the expanding the metal boss 10a,10b is carried out, wherein an annular sealing element 17 is inserted in the extraction orifice 7, around and in contact with the neck 16a,16b, in the gap that may exist in the extraction orifice 7 between the first fibre composite shell layer 2 and the neck 16a,16b of the metal boss 10a,10b (cf. Figure 6).

The annular sealing element 17 is preferably made of polymer resin, preferably made of thermoplastic resin, and even more preferably made of a polymer from the polyolefins family - for example polypropylene (PP), a polymer from the polyesters family - for example polyethylene terephthalate (PET), a polymer from the polyacetals family - for example polyoxymethylene (POM), a polymer from the polyaryletherketones (PAEK) family - for example polyetherketoneketone (PEKK) or polyetheretherketone (PEEK), a polymer from the polyamides family - for example polyamide 6 (PA 6), polyamide 11 (PA 11), polyamide 12 (PA 12), polyamide 66 (PA 66) or polyphthalamide (PPA), a polymer from the thermoplastic polyurethanes family, polyphenylene sulfide (PPS) or a mixture of these.

In a preferred embodiment, the annular sealing element 17 is heated during step S8 or during a following step, in order to be bonded to the first fibre composite shell layer 2 and to the metal boss 10a, 10b, then forming a unitary rigid structure able to withstand an overpressure of at least 2 bars.

In the case where the metal boss 10a,10b has a base 12a, 12b provided with at least one back draft shaped recess 25 on its outer surface 23a,23b, a part of the annular sealing element 17 penetrates inside at least one back draft shaped recess 25, improving the bonding between the annular sealing element 17 and the metal boss 10a,10b.

In a preferred embodiment, an additional and optional step S9 following the step S7 of expanding the metal boss 10a,10b and/or the step S8 of inserting an annular sealing element 17 in the extraction orifice 7 is carried out, wherein a second fibre composite shell layer 5 is formed on the first fibre composite shell layer 2 and on the annular sealing element 17 if present (cf. Figure 7).

In a preferred embodiment, the second fibre composite shell layer 5 can be formed according to the following steps:
- a step S9a of winding composite tapes 4 made of a composite material mixing fibres and polymer resin, around the first fibre composite shell layer 2 and the annular sealing element 17; and
- a step S9b of heating the composite tapes 4 for consolidating the first fibre composite shell layer 2 and the second fibre composite shell layer 5 together.

The step S9 of forming a second fibre composite shell layer 5 can also be implemented under heat and pressure with a winding machine, the pressure conditions coming from the tension applied on the composite tapes 4 during winding. For example, the heat conditions are realized by a diode, microwave, infrared radiation or by any other heating means.

The step S9a of winding composite tapes 4 and the step S9b of heating the composite tapes 4 are preferably performed simultaneously.

For example, the fibres can be high-strength fibres, such as carbon fibres, glass fibres and/or basalt fibres, impregnated by a polymer resin, preferably a polymer from the polyolefins family - for example polypropylene (PP), a polymer from the polyesters family - for example polyethylene terephthalate (PET), a polymer from the polyacetals family - for example polyoxymethylene (POM), a polymer from the polyaryletherketones (PAEK) family - for example polyetherketoneketone (PEKK) or polyetheretherketone (PEEK), a polymer from the polyamides family - for example polyamide 6 (PA 6), polyamide 11 (PA 11), polyamide 12 (PA 12), polyamide 66 (PA 66) or polyphthalamide (PPA), a polymer from the thermoplastic polyurethanes family, polyphenylene sulfide (PPS) or a mixture of these.

In a preferred embodiment, the composite tapes 4 of the first and second fibre composite shell layers 2,5 can be the same. The polymer resin of the first and second fibre composite shell layers 2,5 are also preferably the same. When an annular sealing element 17 is present, the polymer resin of the second fibre composite shell layer 5 and of the annular sealing element 17 are also preferably the same, for example a polymer from the polyolefins family, a polymer from the polyesters family, a polymer from the polyacetals family, a polymer from the polyaryletherketones (PAEK) family, a polymer from the polyamides family, a polymer from the thermoplastic polyurethanes family, polyphenylene sulfide (PPS) or a mixture of these.

During the step S9 of forming a second fibre composite shell layer 5, the second fibre composite shell layer 5 is preferably bonded to the first fibre composite shell layer 2 and to the annular sealing element 17 if present in order to form a unitary rigid structure able to withstand an overpressure the cylinder is designed for.

In a preferred embodiment, an annular seal 28 is housed in the two opposing annular grooves 29, 30 provided between the annular outer radial surface 13a,13b of a metal boss 10a,10b and the annular inner radial surface 15a,15b of an end fitting 11a,11b.

In the case where the annular seal 28 is an O-ring seal 281, it is for example fitted manually in one of the two opposing annular grooves 29, 30 before step S6 of inserting a metal boss 10a, 10b in an end fitting 11a,11b (cf. Figures 9 and 16).

In the case where the annular seal 28 is an injected seal 282, the elastomer material is injected in the ring-shaped channel 31 formed by the two opposing annular grooves 29, 30 after the step S6 of inserting a metal boss 10a,10b in an end fitting 11a,11b, and before the optional steps S8 and S9 of inserting an annular sealing element 17 and forming a second fibre composite shell layer 5 respectively (cf. Figures 8 and 15). The injection of an elastomer material is made from the outside of the tank 1, though at least one channel being formed by two notches 32,33 facing each other, each provided in the annular inner radial surface 15a,15b of the end fitting 11a,11b and in the annular outer radial surface 13a,13b of the metal boss 10a,10b.

The annular seal 28 improves the fluid tightness between the metal boss 10a, 10b and the end fitting 11a,11b where it is inserted, notably in the case where the annular outer radial surface 13a,13b of the metal boss 10a,10b and the annular inner radial surface 15a,15b of the end fitting 11a,11b are not perfectly complementary.

Another sealant or glue can be provided between the annular outer radial surface 13a,13b of a metal boss 10a,10b and the annular inner radial surface 15a,15b of an end fitting 11a,11b, not necessarily inside a groove.

The invention can be used to produce a wide variety of fibre composite tanks for different applications, such as containers for storage for example of hydrogen, helium, nitrogen, krypton, water, alkali, liquid acid or compressed natural gas (CNG), etc. The dimensions of the tank 1 can range from 60 L to 2 000 L or even more.

## Claims

1. Method for producing a fibre composite tank (1) for containing a fluid, extending along a longitudinal axis (X), comprising the following steps:
- a step (S1) of assembling a removable moulding mandrel (8);
- a step (S2) of applying an end fitting (11a,11b) to the moulding mandrel (8), said end fitting (11a,11b) being a metal ring having an opening (14a,14b) bounded by an annular inner radial surface (15a,15b) and large enough for removing the moulding mandrel (8) therethrough after being disassembled;
- a step (S3) of forming a first fibre composite shell layer (2) on the outer surface (37) of the moulding mandrel (8) and on the outer surface (22a,22b) of the end fitting (11a,11b), forming an extraction orifice (7) for the moulding mandrel (8);
- a step (S4) of disassembling and removing the moulding mandrel (8) through the opening (14a,14b) of the end fitting (11a,11b);
- a step (S5) of shrinking a metal boss (10a,10b) by cooling it to a negative temperature, the metal boss (10a,10b) having a base (12a,12b) with an annular outer radial surface (13a,13b);
- a step (S6) of inserting the annular outer radial surface (13a,13b) of the metal boss (10a, 10b) in the opening (14a,14b) of the end fitting (11a,11b) through the extraction orifice (7);
- a step (S7) of expanding the metal boss (10a,10b) by warming it to a positive temperature, the annular outer radial surface (13a,13b) of the metal boss (10a,10b) being in sealing contact with the annular inner radial surface (15a,15b) of the opening (14a,14b) of the end fitting (11a,11b).

2. Method according to claim 1, **characterized in that** step (S3) of forming a first fibre composite shell layer (2) comprises the following steps:
- a step (S3a) of winding a liner film (3) made of polymer resin, around the moulding mandrel (8) and the end fitting (11a,11b);
- a step (S3b) of winding composite tapes (4) made of a composite material mixing fibres and polymer resin, around the liner film (3); and
- a step (S3c) of heating or curing the liner film (3) and/or the composite tapes (4) for consolidating the composite tapes (4) and liner film (3) together.

3. Method according to claim 2, **characterized in that** the polymer resin of the liner film (3) and the polymer resin of the composite tapes (4) are the same.

4. Method according to claim 2 or 3, **characterized in that** the polymer resin of the liner film (3) and/or of the polymer resin of the composite tapes (4) is thermoplastic resin.

5. Method according to any of the claims 2-4, **characterized in that** the polymer resin of the liner film (3) and/or of the composite tapes (4) is a polymer from the polyolefins family, a polymer from the polyesters family, a polymer from the polyacetals family, a polymer from the polyaryletherketones (PAEK) family, a polymer from the polyamides family, a polymer from the thermoplastic polyurethanes family, polyphenylene sulfide (PPS) or a mixture of these.

6. Method according to any of the claims 2-5, **characterized in that** the step (S3a) of winding a liner film (3) and/or the step (S3b) of winding composite tapes (4) are/is performed simultaneously with step (S3c) of heating the liner film (3) and/or the composite tapes (4).

7. Method according to any of the previous claims, **characterized in that** the step (S5) of shrinking a metal boss (10a,10b) is performed by immersing the metal boss (10a,10b) in dry ice made of solid carbon dioxide.

8. Method according to any of the previous claims, **characterized in that** the metal boss (10a,10b) has a neck (16a,16b) protruding outside the opening (14a,14b) of the end fitting (11a,11b), and **in that** the method comprises the following step after the step (S7) of expanding the metal boss (10a,10b):
- a step (S8) of inserting an annular sealing element (17) in the extraction orifice (7), around and in contact with the neck (16a, 16b).

9. Method according to claim 8, **characterized in that** the annular sealing element (17) is made of polymer resin, preferably made of thermoplastic resin.

10. Method according to any of the claims 8-9, **characterized in that** the metal boss (10a,10b) has a neck (16a,16b) protruding outside the opening (14a,14b) of the end fitting (11a,11b), and **in that** the method comprises the following step after the step (S7) of expanding the metal boss:
- a step (S9) of forming a second fibre composite shell layer (5) on the first fibre composite shell layer (2) and the annular sealing element (17).

11. Method according to claim 10, **characterized in that** step (S9) of forming a second fibre composite shell layer (5) comprises the following steps:
- a step (S9a) of winding composite tapes (4) made of a composite material mixing fibres and polymer resin, around the first fibre composite shell layer (2) and the annular sealing element (17); and
- a step (S9b) of heating the composite tapes (4) for consolidating the first fibre composite shell layer (2) and the second fibre composite shell layer (5) together.

12. Method according to claim 11, **characterized in that** the polymer resin of the annular sealing element (17), of the first fibre composite shell layer (2) and of the second fibre composite shell layer (5) is the same.

13. Method according to claim 11 or 12, **characterized in that** the polymer resin of the annular sealing element (17), of the first fibre composite shell layer (2) and/or of the second fibre composite shell layer (5) is thermoplastic resin.

14. Method according to claims 11 to 13, **characterized in that** the polymer resin of the annular sealing element (17), of the first fibre composite shell layer (2) and/or of the second fibre composite shell layer (5) is a polymer from the polyolefins family, a polymer from the polyesters family, a polymer from the polyacetals family, a polymer from the polyaryletherketones (PAEK) family, a polymer from the polyamides family, a polymer from the thermoplastic polyurethanes family, polyphenylene sulfide (PPS) or a mixture of these.

15. Method according to claim 2 or 11, **characterized in that** the fibres of the composite tapes (4) comprise carbon fibres, glass fibres and/or basalt fibres.

16. A fibre composite tank (1) for containing a fluid, **characterized in that** it is a product resulting from the method according to any of the previous claims, comprising:
- a first fibre composite shell layer (2),
- a metal boss (10a,10b) having a base (12a,12b) with an annular outer radial surface (13a,13b), and
- an end fitting (11a,11b) being a metal ring having an opening (14a,14b) bounded by an annular inner radial surface (15a, 15b);
and **characterized in that** the annular outer radial surface (13a,13b) of the metal boss (10a,10b) is in sealing contact with the annular inner radial surface (15a,15b) of the opening (14a,14b) of the end fitting (11a,11b).

17. A fibre composite tank (1) according to claim 16, **characterized in that** it further comprises an annular seal (28) provided between the annular outer radial surface (13a,13b) of a metal boss (10a,10b) and the annular inner radial surface (15a,15b) of an end fitting (11a,11b).

18. A fibre composite tank (1) according to claim 17, **characterized in that** the annular seal (28) is an O-ring seal (281) or a injected seal (282) formed by injecting an elastomer material, the annular seal being housed into two opposing annular grooves (29, 30), with one annular groove (30) provided in the annular inner radial surface (15a,15b) of the end fitting (11a,11b) and one annular groove (29) provided in the annular outer radial surface (13a,13b) of the metal boss (10a,10b).
